# EUROPÄISCHE PATENTSCHRIFT

(11) **EP 0 592 477 B1**
(45) Veröffentlichungstag und Bekanntmachung des Hinweises auf die Patenterteilung: **24.04.1996**
(21) Anmeldenummer: 92912608.4
(22) Anmeldetag: 25.06.1992
(51) Int. Cl.: B01D 47/18, B01D 53/18, B01D 53/74, F23J 15/04, B01D 47/12, B01D 47/06

(54) **VORRICHTUNG ZUR RAUCHGASREINIGUNG**
DEVICE FOR CLEANING FLUE GAS
DISPOSITIF DE LAVAGE DE GAZ DE FUMEE

(30) Priorität: 28.06.1991 DE 9107979 U
(43) Veröffentlichungstag der Anmeldung: 20.04.1994
(73) Patentinhaber: HACKL, Harald, D-82392 Habach (DE)
(72) Erfinder: HACKL, Harald, D-82392 Habach (DE)
(74) Vertreter: Brose, D. Karl, Dipl.-Ing.
(86) Internationale Anmeldenummer: DE9200520
(87) Internationale Veröffentlichungsnummer: WO9300150

(56) Entgegenhaltungen:
- EP-A- 0 096 149
- DE-A- 2 362 635
- DE-A- 2 437 743
- DE-A- 2 935 296
- DE-A- 3 426 015
- FR-A- 328 798
- FR-A- 1 055 181
- FR-A- 2 162 144
- GB-A- 2 014 470
- GB-A- 2 169 816

## Beschreibung

Die vorliegende Erfindung betrifft eine Vorrichtung zur Rauchgasreinigung.

Die derzeit gebräuchlichen Feuerungsanlagen benötigen eine bestimmte Abgastemperatur, damit im Kamin kein Kondensat entsteht. Je nach Baumaterial müssen die Kamine sogar isoliert werden, damit diese erforderliche Abgastemperatur (ca. 180°C) aufrechterhalten werden kann. Dadurch wird ein relativ großer Anteil der erzeugten Energie nicht genutzt und sinnlos an die Umwelt abgegeben.

Bei mit Öl und Gas betriebenen Feuerungsanlagen gibt es bereits Heizsysteme, die über weitere Wärmetauscher das Rauchgas bis auf ca. 45°C herunterkühlen. Dabei ist der zweite Wärmetauscher aus Edelstahl und liefert die Wärmeenergie an den Kessel. Der dritte Warmetauscher ist aus Kunststoff und erwärmt die Ansaugluft des Brenners. Das dabei entstehende Kondensat wird über einen Katalysator entsorgt.

Dieses Verfahren läßt sich jedoch nicht bei festen Brennstoffen anwenden. Bei der Verbrennung fester Brennstoffe entstehen nämlich zu viele Stäube und Aschen. Dadurch wird das Kondensat nicht als Flüssigkeit erhalten. Vielmehr entsteht ein teerig-harziger Rückstand, der die entsprechenden weiteren Wärmetauscher innerhalb kurzer Zeit verkleben würde.

Darüber hinaus können beispielsweise reine Holzheizungen die heute geforderten Emissionswerte kaum noch einhalten. Die Verbrennung teilweise chemisch belasteter Holzprodukte, wie z.B. Spanplatten (Formaldehyd) und Späne, ist aufgrund der Emissionsvorschriften nicht mehr möglich.

Die Druckschrift FR-A- 1 055 181 zeigt eine Vorrichtung zur Rauchgasreinigung mit einer Waschkammer, einer Rauchgaszuführung, einer Rauchgasabführung und einer Ableitung für verbrauchtes Waschwasser und einer feststehenden Vorrichtung zur Zuführung des Waschwassers, wobei in der Waschkammer eine mittels eines Antriebsmotors um eine horizontale Achse drehbare Vorrichtung angeordnet ist, die Vorrichtungen zur Zerstäubung des Waschwassers trägt.

Die FR-A- 328 798 zeigt eine der vorgenannten Rauchgasreinigungsvorrichtung außerordentlich ähnliche Vorrichtung.

Die DE-A- 24 37 743 zeigt eine Vorrichtung zur Entstaubung von Gasen, bei der das Gas durch eine Waschkammer geführt wird, in der ein Hohlrotationskörper angeordnet ist, dessen Vorderteil ein Düsensystem enthält, und auf dessen Oberfläche Leitschaufeln angebracht sind. Die Leitschaufeln dienen dabei jedoch dem Antrieb des Hohlrotationskörpers, indem sie die dafür erforderliche Bewegungsenergie aus der Bewegung des durch die Waschkammer strömenden Rauchgasstromes entnehmen.

Die FR-A-2 162 144 zeigt eine Rauchgasreinigungsvorrichtung mit einer Waschkammer, in der das Rauchgas ebenfalls mit von einer rotierenden Vorrichtung versprühten Wassertröpfchen beaufschlagt wird.

Aus der EP-A-0 096 149 ist ein Rauchgasreinigungsverfahren mittels einer Kammer mit einer achsmittigen Drehzerstäubervorrichtung, mittels der Waschflüssigkeit in Tropfenform in den Gasstrom eingetragen und mit den Schwebstoffen in Kontakt gebracht wird, bekannt.

Die GB-A-2 014 470 zeigt eine Gasentstaubungsvorrichtung, bei der ebenfalls eingesprühtes Reinigungswasser zerstäubt und mit zu reinigenden Gasstrom in Verbindung gebracht wird.

Die DE-A-23 62 635 zeigt eine Vorrichtung zur Entstaubung von Gasen, bei der das Rauchgas durch eine Waschkammer geführt wird, in der ein Hohlrotationskörper drehbar und antreibbar angeordnet ist, dessen Vorderteil ein Düsensystem enthält, und auf dessen Oberfläche Leitschaufeln angebracht sind. Diese dienen einer schraubenförmigen Bewegung des Rauchgasstromes an dem spindelförmigen Hohlrotationskörper, der ein Großteil der Waschkammer ausfüllt, und der nicht gasdurchlässig ist, vorbei. Diese Vorrichtung weist alle Merkmale des Oberbegriffs von Anspruch 1 auf.

In der DE-A-34 26 015 wird eine Maschine beschrieben, bei welcher ein drehbare Zerstäubungsvorrichtung in einen Waschwassersumpf eintaucht. An einer rotierenden Welle angebrachte Scheiben tauchen in einen Waschwassersumpf und versprühen das Wasser in das horizontal durch die Waschkammer strömende Gas. Wodurch die Strömung des Gases bewirkt wird, bleibt offen. Eine schraubenförmige Bewegung des erzeugten Sprühnebels findet nicht statt. Ferner wird das Wasser lediglich durch die eintauchenden Scheiben versprüht, zusätzliche (fest montierte) Wasserzuführdüsen sind nicht vorgesehen.

Ausgehend von diesen bekannten Vorrichtungen ist es Aufgabe der vorliegenden Erfindung, eine Rauchgasreinigungsvorrichtung zu schaffen, welche bei guter Reinigungswirkung gleichzeitig einen geringen Raumbedarf aufweist und eine Möglichkeit zur Wärmerückgewinnung bietet.

Erfindungsgemäß wird diese Aufgabe durch die Merkmale des Anspruchs 1 gelöst.

Dabei kann das Waschwasser vorzugsweise durch Umwälzung mehrfach verwendet werden. Dies verringert den Wasserverbrauch und den Anfall an verschmutztem Abwasser. Gleichzeitig wird die Waschwassertemperatur höher.

Es ist dann möglich, einerseits die Feststoffverschmutzungen in einem Tank absetzen zu lassen, und dann nur den Satz als Abwasser zu entfernen. Die Feststoffverschmutzungen können natürlich auch mittels eines Filters entfernt werden. Gleichzeitig kann das Abwasser in Kläranlagen zur Neutralisierung verwendet werden. Gleichzeitig erreicht das mehrfach umgewälzte Waschwasser eine so hohe Temperatur, daß ihm mittels eines Wärmetauschers Wärmeenergie entzogen werden kann. Diese Wärmeenergie ist damit praktisch aus dem Rauchgas zurückgewonnen worden.

Die Erfindung erlaubt somit zusätzlich eine bessere Ausnutzung der Energie des Brennstoffs. Darüber hinaus erfolgt eine teilweise Neutralisierung der gasförmigen Schadstoffe (SO₂, NOX) durch die alkalischen Salze (beispielsweise Kaliumkarbonat), die in der Flugasche enthalten sind, durch die jeweilige Lösung dieser Stoffe im Wasser. Hierdurch kann auch das Problem des "sauren Regens" von der Luft ins Wasser verlagert werden, wo es durch Pufferung oder Neutralisierung leicht gelöst werden kann.

Vorteilhafte Weiterbildungen der Erfindung ergeben sich aus den Unteransprüchen.

Die Erfindung soll im folgenden anhand der beigefügten Zeichnungen näher erläutert werden.

Es zeigen:
**Fig. 1** ein Blockschaltbild einer mit einer erfindungsgemäßen Rauchgasreinigungsvorrichtung versehenen Heizanlage;
**Fig. 2** einen Querschnitt durch eine Waschkammer einer erfindungsgemäßen Rauchgasreinigungsvorrichtung;
**Fig. 3** eine der Scheiben, die in der Rauchgasreinigungsvorrichtung nach Fig. 2 verwendet werden;
**Fig. 4** einen Distanzring mit aufgeschweißten Flügeln, wie er bei der Rauchgasreinigungsvorrichtung gemäß Fig. 2 Verwendung findet;
**Fig. 5** ein Blockschaltbild einer besonders bevorzugten erfindungsgemäßen Rauchgasreinigungsvorrichtung;
**Fig. 6** eine vertikale Längsschnittdarstellung durch eine Waschkammer für eine Rauchgasreinigungsvorrichtung gemäß Fig. 5;
**Fig. 7** einen Schnitt entlang A-B durch die Waschkammer gemäß Fig. 6;
**Fig. 8** einen Schnitt entlang C-D durch die Waschkammer gemäß Fig. 6;
**Fig. 9** einen Schnitt entlang E-F durch die Ventilatorzone der Waschkammer gemäß Fig. 6.

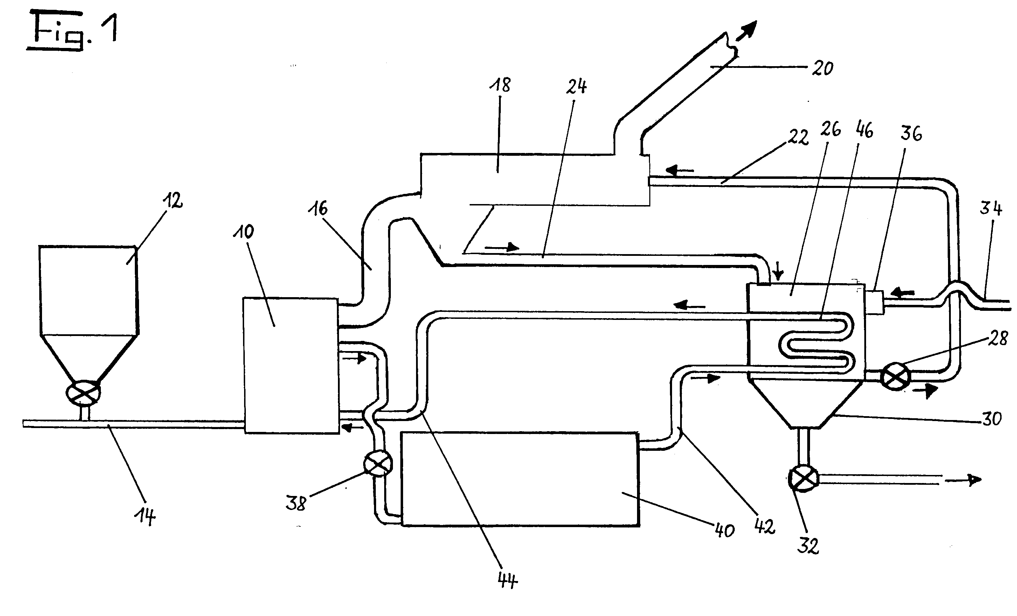

Wie in Fig. 1 dargestellt, umfaßt eine Heizanlage mit einer erfindungsgemäßen Vorrichtung zur Rauchgasreinigung einen üblichen Heizkessel 10, in dem feste Brennstoffe verfeuert werden, und mit deren Abwärme ein Medium erwärmt wird. Die erfindungsgemäße Vorrichtung kann natürlich auch bei anderen Brennstoffen angewendet werden.

Die festen Brennstoffe können dabei aus einem Vorratsbehälter 12 über eine Zuführung 14 automatisch zugeführt werden.

Die dabei entstehenden Abgase werden über eine Rauchgasableitung 16 der Waschkammer 18 zugeführt. Sie besitzt jedenfalls einen Anschluß für die Rauchgasleitung 20 zum Kamin. Durch diese Leitung werden die gereinigten Abgase einem normalen Kamin zugeführt. Weiter weist die Waschkammer 18 einen Anschluß für eine Waschwasserzuführung 22 und für die Waschwasserabführung 24 auf. Diese mündet in einen Tank 26. Dieser Tank 26 dient dazu, das Waschwasser durch Absetzen der darin vorhandenen Feststoffpartikel zu klären. An diesem Tank 26 ist eine Umwälzpumpe 28 angeschlossen, die das Waschwasser wieder über die Waschwasserzuführung 22 in die Waschkammer 18 pumpt. Am unteren Ende des Tanks 26 ist ein Schlammabsetztrichter 30 vorgesehen. Dessen unterstes Ende ist wiederum mit einer weiteren Pumpe 32 verbunden. Diese Pumpe dient dazu, Schlamm und verbrauchtes Abwasser abzupumpen. Weiterhin ist an diesem Tank 26 eine Frischwasserzuleitung 34 über einen Niveauregler 36 angeschlossen. Dieser Niveauregler 36 dient dazu, einen stets konstanten Waschwasserstand in dem Tank 26 aufrechtzuerhalten, unabhängig davon, ob gerade verbrauchtes Waschwasser und Schlamm über die Pumpe 32 abgezogen wird, und auch unabhängig von dem Maß der Verdunstung von Waschwasser in der Waschkammer 18.

Das mit Feststoff betriebene Heizungssystem, an dem hier beispielhaft eine erfindungsgemäße Rauchgasreinigungsvorrichtung dargestellt ist, weist einen üblichen Kreislauf für das Heizmedium, in diesem Falle Wasser, auf. Das im Heizkessel 10 erhitzte Wasser wird über eine Umwälzpumpe 38 den Wärmeverbrauchern 40 zugeführt. Die Rücklaufleitung 42 von den Verbrauchern 40 ist jedoch nicht direkt an dem Rücklaufanschluß 44 des Heizkessels 10 angeschlossen. Die Rücklaufleitung 42 verbindet vielmehr die Verbraucher 40 mit einem Wärmetauscher 46, der in dem Tank 26 angebracht ist. Durch diesen zusätzlichen Wärmetauscher wird dem Waschwasser zusätzliche Energie entzogen. Es wird dadurch erreicht, daß das dem Heizkessel 10 zugeführte Rücklaufwasser schon wieder etwas angewärmt ist. Dadurch kann auf vorteilhafte Weise eine zusätzliche Energierückgewinnung erreicht werden.

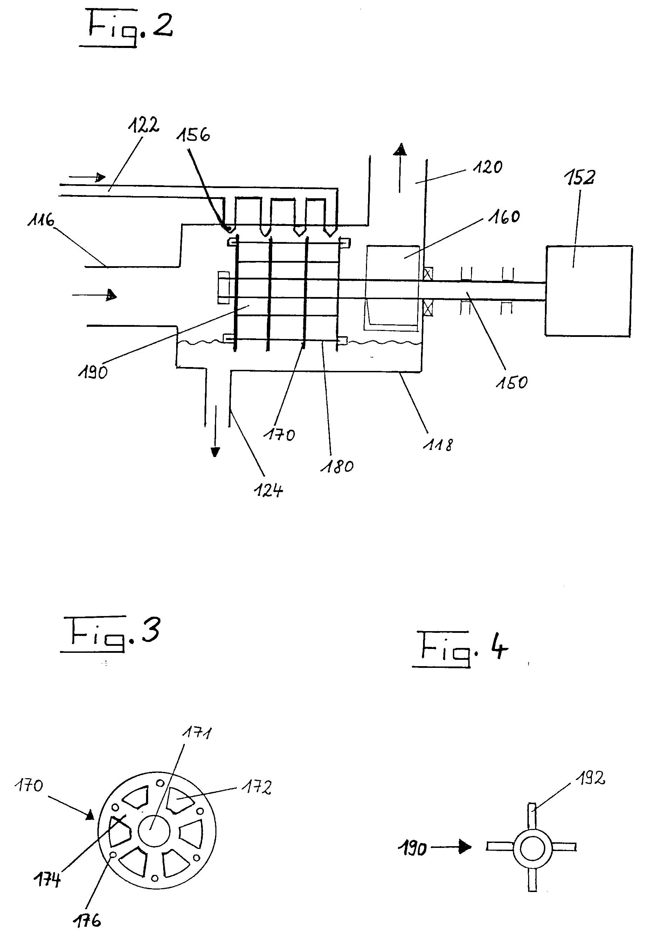

Fig. 2 zeigt eine Ausführungsform einer erfindungsgemäßen Rauchgasreinigungsanlage. Auch hier ist eine Waschkammer 118 in der Form eines liegenden Zylinders vorhanden. Diese weist an der einen Seite eine Rauchgaszuführung 116 auf. Unten ist eine Abführung 124 für das verbrauchte Waschwasser vorgesehen und gegenüber der Rauchgaszuführung 116 ist nach oben eine Rauchgasabführung 120 angebracht. An der der Rauchgaszuführung 116 gegenüberliegenden Seite der zylinderförmigen Waschkammer 118 ist eine Antriebswelle 150 durch die Stirnfläche des Zylinders mit einer dichten Lagerung durchgeführt. Diese Welle 150 ist außerhalb der Waschkammer nochmals gelagert und wird von einem Motor 152 angetrieben. Innerhalb der Waschkammer trägt diese Welle auf der Höhe der Rauchgasableitung 120 ein Lüfterrad 160. Anschließend an dieses Lüfterrad trägt die Welle 150 mehrere Scheiben 170. Eine solche Scheibe 170 ist in der Fig. 3 in Draufsicht dargestellt. Sie weist eine Mittelbohrung 171 zur Durchführung der Welle sowie sektorenförmige Aussparungen 172 auf, zwischen denen Stege 174 angeordnet sind, die einen außen umlaufenden Ring tragen. In den Bereichen, in denen die Stege auf den äußeren Ring treffen, sind Bohrungen 176 vorgesehen. Die Stege können dabei so geformt sein, daß sie ebenfalls wie Ventilatorflügel wirken. Vorzugsweise können sie turbinenschaufelförmig ausgebildet sein.

Die Scheiben 170 werden auf der Achse durch Gewindestangen 180 mit Distanzhülsen verbunden. Dabei erstrecken sich die Gewindestangen 180 durch die Bohrungen 176 der einzelnen Scheiben. Zwischen den Scheiben 170 sind auf der Welle 150 noch Distanzringe 190 angebracht. Diese müssen natürlich dieselbe Höhe haben wie die Distanzhülsen auf den Gewindestangen 180. Auf die Distanzringe 190 sind Flügel 192 aufgeschweißt, die zu einer weiteren Verwirbelung des Wassers beitragen (siehe Fig. 4).

Es ist dabei besonders bevorzugt, daß der Wasserstand in der Waschkammer so geregelt wird, daS die Gewindestangen 180 beim Umlaufen gerade in das Waschwasser eintauchen und dieses von neuem versprühen.

Bei dieser Ausführungsform der Erfindung wird das neu in die Waschkammer zugeführte Waschwasser über Düsen 156, die oben an der Mantelfläche der zylinderförmigen Waschkammer 118 angeordnet sind versprüht. Diese Ausführungsform ist daher konstruktiv einfacher zu bauen. Es ergeben sich auch noch geringere Abdichtungsprobleme, da in diesem Falle nur eine abzudichtende Durchführung einer Welle in die Waschkammer vorgesehen werden muß.

Der besondere Vorteil der erfindungsgemäßen Rauchgasreinigungsvorrichtung liegt darin, daß durch die in der Waschkammer rotierenden Schaufeln eine wesentlich bessere Auswaschung der Verschmutzungen des Rauchgases erfolgt. Durch den sogenannten Wischeffekt in einer rotierenden Maschine wird nämlich die wirksame Oberfläche des Tropfens um ein Vielfaches vergrößert. Bei der Ausführungsform der Erfindung gemäß Fig. 2 wird außerdem durch den regelbaren Wasserstand eine Mehrfachverwendung des Waschwassers bei einem Durchlauf durch die Waschkammer erzielt. Dadurch, daß die Gewindestangen 180 immer wieder in das Waschwasser eintauchen, wird dieses nämlich immer wieder hochgeschleudert.

Durch diese erfindungsgemäße Anordnung einer Waschkammer mit der Form eines liegenden Zylinders, in der eine wasserzerstäubende Einrichtung rotiert, kann der gleiche Reinigungseffekt wie bei der Anlage gemäß WO 84/03843 mit wesentlich geringerem Aufwand und Platzbedarf erreicht werden. Üblicherweise genügt es, wenn eine erfindungsgemäße Reinigungsvorrichtung den etwa 3- bis 4-fachen Durchmesser des Rauchgasrohres aufweist und in ihrer Länge etwa dem 6- bis 8-fachen Durchmesser des Rauchgasrohres entspricht.

Es ist dann auch nicht mehr erforderlich, einen Kamin vorzusehen. Durch die luftfördernde Wirkung der Rauchgasreinigungsanlage wird bereits ein ausreichender Zug in der Feuerung sichergestellt. Da das gereinigte Rauchgas auch praktisch keine Verschmutzungen mehr enthält, kann dieses auch in geringer Höhe in die Umwelt abgelassen werden. Damit können also auch die sonst recht aufwendigen Kaminbauten eingespart werden.

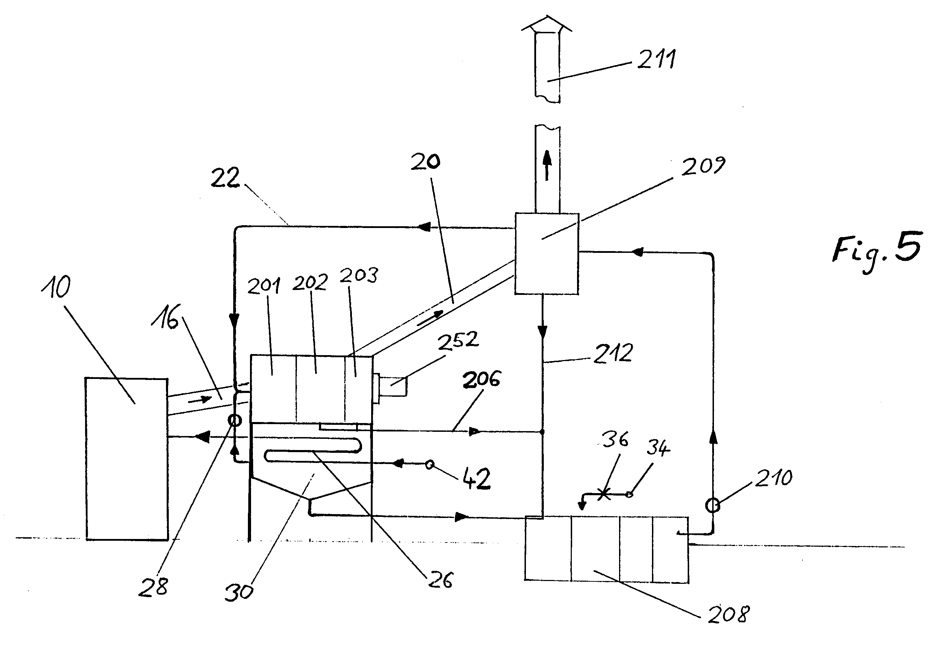

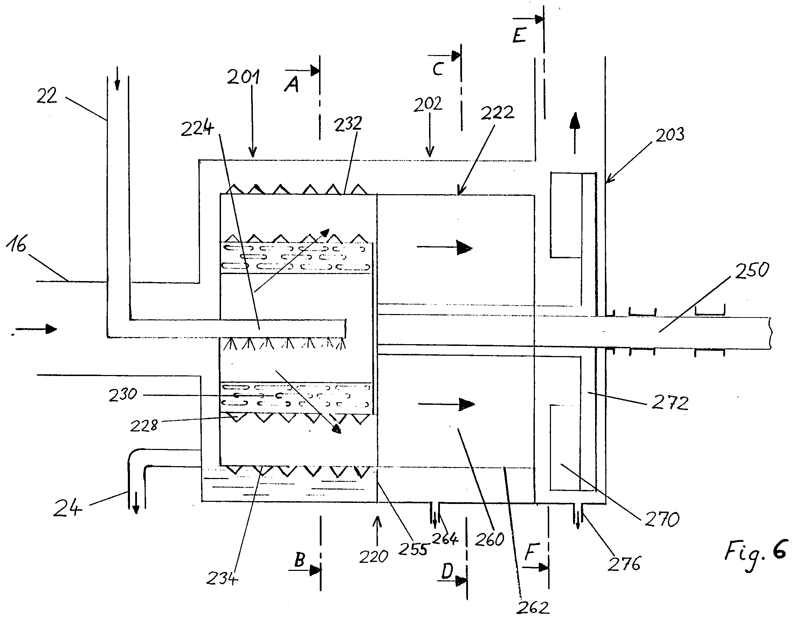

Eine weitere, besonders bevorzugte Rauchgasreinigungsvorrichtung ist in den Fig. 5 bis 9 dargestellt. Auch bei dieser Rauchgasreinigungsvorrichtung ist, wie in Fig. 5 dargestellt, ein Kessel 10 vorgesehen, der über eine Rauchgasableitung 16 mit einer Waschkammer 18 verbunden ist. An der Waschkammer 18 ist ebenfalls die Rauchgasleitung 20 angeschlossen. Im Gegensatz zu der vorher beschriebenen Rauchgasreinigungsvorrichtung ist die Waschkammer 18 hier jedoch in drei Zonen 201, 202, 203 geteilt. Der Aufbau der Waschkammer 18 wird weiter unten im Hinblick auf die Fig. 6 bis 9 noch näher erläutert werden.

Bei dieser Ausführungsform der Rauchgasreinigungsvorrichtung werden lediglich die Abwässer der Waschzone 201 dem Tank 26 zugeführt. Auch hier ist an dem Tank 26 eine Umwälzpumpe 28 angeschlossen, die das Waschwasser wieder über die Waschwasserzuführung 22 in die Waschkammer 18 zurückführt. Am unteren Ende des Tanks 26 ist auch hier ein Schlammabsetztrichter 30 vorgesehen. Auch hier wird von dem unteren Ende des Schlammabsetztrichters Schlamm und verbrauchtes Abwasser abgeführt. Dieses wird einem Klärbecken 208 zugeführt. Auch hier ist in dem Tank 26 ein Wärmetauscher 46 vorgesehen, der das von den Wärmeverbrauchern über die Rücklaufleitung 42 zurückkehrende abgekühlte Heizwasser vorerwärmt, bevor es wieder dem Heizkessel 10 zugeführt wird.

Das Abwasser aus der Zentrifugierzone 202 und aus dem Ventilator 203 wird über eine weitere Leitung 206 direkt dem Klärbecken zugeführt.

Die hier beschriebene Anordnung hat den Vorteil, daß nur das sehr warme Wasser aus der Waschzone 201, das jedoch nicht so stark verschmutzt ist, dem Tank 26 zugeführt wird. Dadurch ist die Wassertemperatur in diesem Tank höher, und es kann vorteilhafterweise eine stärkere Erwärmung des von den Verbrauchern zurückkehrenden Rücklaufwassers des Heizkreislaufs erfolgen. Damit wird der Wirkungsgrad günstiger. Außerdem wird das stärker verschmutzte Wasser nicht mehr umgewälzt, sondern direkt dem Klärbecken zugeführt. Vorzugsweise liegt das Klärbecken tiefer als die Waschkammer 18 und auch tiefer als das untere Ende des Schlammabsetztrichters 30. Dadurch kann der Abfluß des stark verschmutzten Wassers in das Klärbecken 208 allein aufgrund der Schwerkraft und ohne Einschaltung einer eigenen Pumpe erfolgen.

Auch hier ist an der Waschkammer 18 ein Antriebsmotor 252 für die drehbare Vorrichtung in der Waschkammer 18 vorgesehen.

Bei dieser Ausführungsform der Erfindung werden die Rauchgase nach Verlassen der Waschkammer 18 noch durch einen weiteren Wärmetauscher 209 geführt. Diesem Wärmetauscher wird über eine Umwälzpumpe 210 geklärtes Wasser aus den Klärbecken 208 zugeführt. In dem Wärmetauscher 209 wird dieses Wasser vorgewärmt, und es wird dann über eine weitere Leitung der Waschzone 201 in der Waschkammer 18 zugeführt. Erst dann strömt das Rauchgas zu einem Kamin 211, der vorzugsweise aus Edelstahl oder Kunststoff hergestellt ist, da sich in ihm auch noch Kondensat bilden kann. Besonders bevorzugt ist es, den Kamin direkt über dem Wärmetauscher 209 anzubringen. Dadurch fließt das Kondensat aus dem Kamin 211 in diesen Wärmetauscher 209. Der Wärmetauscher 209 ist über eine weitere Kondensatleitung 212 mit den Klärbecken 208 verbunden, so daß auch das Kondensat aus diesem Wärmetauscher 209 sowie eventuell das Kondensat aus dem Kamin 211 in die Klärbecken 208 geleitet wird.

Der Wasserspiegel im Klärbecken 208 wird konstant gehalten. Dazu ist eine Frischwasserzuleitung 34 mit einem Niveauregler 36 vorgesehen. Durch diese Konstruktion wird der Verdunstungsverlust an Wasser ausgeglichen.

Eine besonders bevorzugte Ausführungsform der Waschkammer wird im folgenden anhand der Fig. 6 bis 9 beschrieben. Diese besonders bevorzugte Waschkammer 218 ist in drei Zonen aufgeteilt: Waschzone 201, Zentrifugierzone 202 und Ventilatorzone 203.

Die Rauchgasableitung 16 vom Kessel 10 mündet an der Seite der Waschzone 201 mittig. Die Waschwasserzuführung 22 wird dabei in das Zentrum der Rauchgasableitung 16 geführt, und verläuft dort genau in der Mitte der Waschzone 201. Der Strömungsweg der Rauchgase ist durch Pfeile angegeben.

Die gesamte Waschkammer 218 besteht aus einem rechteckigen Gehäuse 220, das gas- und wasserdicht ist, und in dem ein Rotor 222 drehbar gelagert ist. Die Rotationsachse des Rotors 222 liegt dabei waagerecht und mittig in dem Gehäuse 220 der Waschkammer 218. Er wird über eine Welle 250 angetrieben, die gegenüber dem Eintritt der Rauchgasableitung 16 vom Kessel abgedichtet durch eine Seitenwand des Gehäuses 220 hindurchtritt. Die Welle ist außerhalb der Waschkammer 218 entsprechend gelagert, und wird von dem Antriebsmotor 252 angetrieben.

Die Waschzone 201 ist folgendermaßen aufgebaut:
Die Waschwassereintrittsleitung 22 endet in einem konzentrisch zu der Rotationsachse des Rotors 222 verlaufenden, am Ende geschlossenen, feststehenden Rohr 224. Dieses Rohr 224 weist an seiner Mantelfläche eine Vielzahl kleiner Bohrungen auf, durch die das Waschwasser versprüht wird. Um dieses Rohr herum ist ein zylinderförmiger Abschnitt 226 des Rotors 222 angebracht. Dieser zylinderförmige Abschnitt 226 besteht aus einer Mantelfläche aus gelochtem oder geschlitztem Blech, von der zusätzlich kleine Bleche 228 nach außen abstehen, um die Verwirbelung des Wassers zu verbessern. Zusätzlich sind, um die Zentrifugalwirkung zu verbessern, gelochte oder vorzugsweise mit horizontalen Schlitzen versehene Bleche 230 an der Innenseite der Mantelfläche des Rotorteils 226 radial nach innen verlaufend angebracht. Durch diese Konstruktion des inneren Teiles des Rotors wird das aus den Düsen des Innenrohrs 224 sprühende Wasser optimal zerstäubt und gleichzeitig in die Rotationsbewegung versetzt. In einigem Abstand um dieses innere Rotorteil 226 ist koaxial dazu ein äußeres Rotorteil 232 angebracht, welches ebenfalls aus gelochtem oder geschlitztem Blech besteht und ebenfalls kleine Bleche 234 trägt, die schräg angeordnet sind. Dieses äußere Rotorteil dient dazu, das in dem Gehäuse 220 stehende Waschwasser immer wieder erneut umzuwälzen und zu zerstäuben. Um eine entsprechende Waschwassermenge im unteren Bereich des Gehäuses 220 zu halten, ist die Ableitung 24 für das verbrauchte Waschwasser nicht an der tiefsten Stelle des Gehäuses 220 angebracht, sondern leicht nach oben versetzt. Zur Abdichtung der Waschzone 201 gegen die Zentrifugierzone 202 ist ein senkrecht stehendes Trennblech 255 angebracht.

Durch diesen Rotorabschnitt in der Waschzone 201 wird eine optimale Zerstäubung des Waschwassers sowie eine ideale Durchmischung von Rauchgasen und Waschwasser erreicht.

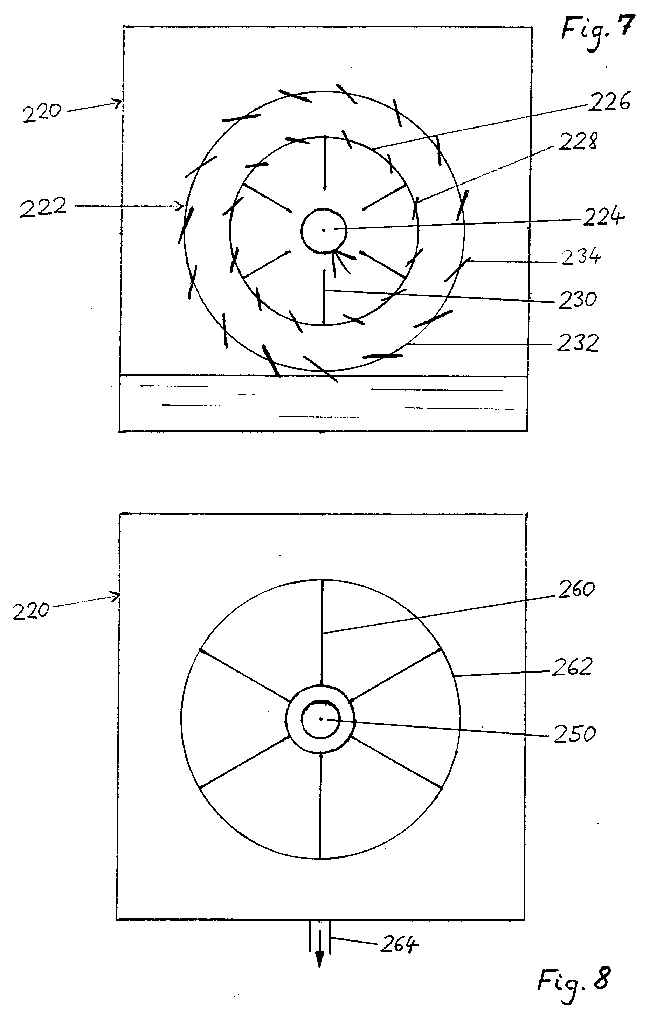

An die Waschzone 201 schließt sich die Zentrifugierzone 202 an. Ein Querschnitt durch diese Zone ist in Fig. 8 dargestellt. In dieser Zone ist der Rotor dergestalt ausgebildet, daß die Welle 250, die am Übergang von der Zentrifugierzone zu der Waschzone endet, mit radial verlaufenden Blechen 260 versehen ist, die eine zylinderförmige koaxiale Trommel 262 tragen, die nur sehr kleine Öffnungen aufweist. Die Waschzone 201 und die Zentrifugierzone 202 sind durch senkrecht stehende Bleche 255 voneinander getrennt. Auch in der Zentrifugierzone ist ein Waschwasserabzug 264 vorgesehen. Dieser mündet jedoch direkt in den Klärbecken 208, und es ist auch nicht vorgesehen, daß ein Rest Wasser in der Zentrifugierzone 202 stehen bleibt, wie dies in der Waschzone 201 der Fall ist.

Die Zentrifugierzone 202 dient dazu, möglichst viel Wasser aus den Rauchgasen zu entfernen. Dadurch werden natürlich auch die entsprechenden Schmutzpartikel entfernt.

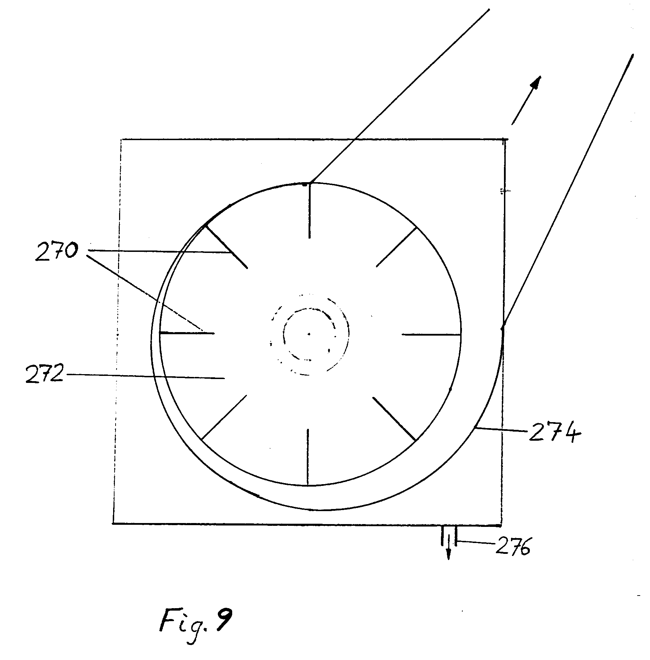

An diese Zentrifugierzone 202 schließt sich die Ventilatorzone 203 an, deren Schnittdarstellung in Fig. 9 gezeigt wird. Der Ventilator ist dabei durch in Radialrichtung stehende Bleche 270 auf einem scheibenförmigen Träger 272 ausgebildet, der ebenfalls an der Welle 250 befestigt ist. Zusätzlich ist diese Ventilatoreinheit mit einer Lochblende 274 als Luftleitblech umgeben. Auch dieser Ventilator hat noch eine zentrifugierende Wirkung, durch die restliche, noch in der Luft befindliche Wassertröpfchen abgeschieden werden, und deswegen hat die Ventilatorzone auch einen Wasserabfluß 276 an ihrem tiefsten Punkt. Durch die Rotation dieses Ventilators in der Ventilatorzone 203 wird das gereinigte und von Wassertropfen befreite Rauchgas durch die Leitung 20 gefördert.

Der Querschnitt des Gehäuses 220 ist hier vorzugsweise quadratisch ausgebildet. Einerseits kann dadurch mehr Waschwasser im unteren Bereich der Waschzone 201 gesammelt werden, andererseits ist die Herstellung eines rechteckigen Gehäuses einfacher und billiger als die Herstellung eines zylindrischen Gehäuses.

## Patentansprüche

1. Vorrichtung zur Rauchgasreinigung mit einer Waschkammer (18; 118), einer Rauchgaszuführung (16; 116), einer Rauchgasabführung (20; 120) und einer Ableitung (24; 124) für verbrauchtes Waschwasser und einer feststehenden Vorrichtung (122; 156; 224) zur Zuführung und Zerstäubung des Waschwassers, wobei in der Waschkammer (18; 118) eine mittels eines Antriebsmotors (152; 252) um eine horizontale Achse drehbare Vorrichtung (150, 170, 180; 222) angeordnet ist, die Mittel (170, 180; 228, 230, 234) zur Zerstäubung des Waschwassers trägt, und wobei an der drehbaren Vorrichtung (150, 170, 180; 222) weitere Mittel (160, 174, 192; 230, 270, 272) zum Transport des Rauchgases und des zerstäubten Waschwassers in schraubenförmigen Bewegungen in horizontaler Richtung durch die Waschkammer (18; 118) befestigt sind, **dadurch gekennzeichnet**, daß die Ableitung (24; 124) für verbrauchtes Waschwasser dergestalt angeordnet bzw. geregelt ist, daß in der Waschkammer (18; 118) ein Sumpf aus Waschwasser stehen bleibt, und die an der drehbaren Vorrichtung (150, 170, 180; 222) angebrachten Mittel (170, 180; 232, 234) zur Zerstäubung des Waschwassers teilweise in diesen Sumpf eintauchen.

2. Vorrichtung nach Anspruch 1, dadurch gekennzeichnet, daß eine Umwälzeinrichtung (24, 26, 28) für das Waschwasser vorgesehen ist, die eine Umwälzpumpe (28) umfaßt, und die Ableitung (24; 124) für das verbrauchte Waschwasser und die Zuleitung (22; 122) zur Zuführung des Waschwassers in die Waschkammer (18; 118) verbindet.

3. Vorrichtung nach Anspruch 2, dadurch gekennzeichnet, daß die Umwälzeinrichtung (26, 28) einen Tank (26) umfaßt, in dem das verbrauchte Waschwasser gesammelt wird, damit sich Feststoffverschmutzungen absetzen können, der mit der Ableitung (24; 124) für das verbrauchte Waschwasser verbunden ist und aus dem das Waschwasser wieder der Umwälzpumpe zugeführt wird.

4. Vorrichtung nach Anspruch 3, dadurch gekennzeichnet, daß der Tank (26) einen Wärmetauscher (46) zur Rückgewinnung von Wärmeenergie aus dem verbrauchten Waschwasser umfaßt.

5. Vorrichtung zur Rauchgasreinigung nach einem der Ansprüche 1 bis 4, dadurch gekennzeichnet, daß das Waschwasser durch Düsen (156), die an der Mantelfläche der zylinderförmigen Waschkammer (118) angebracht sind, auf rotierende Scheiben (170) gesprüht wird, die das Waschwasser weiter zerstäuben.

6. Vorrichtung zur Rauchgasreinigung nach Anspruch 5, dadurch gekennzeichnet, daß die Scheiben (170) auf einer Welle (150) angebracht sind, die gleichzeitig ein Lüfterrad (160) trägt, und die von einem Motor (152) angetrieben wird.

7. Vorrichtung nach Anspruch 5 oder 6, dadurch gekennzeichnet, daß zwischen den Scheiben (170) auf der Welle (150) Distanzstücke (190) mit angeschweißten Flügeln (192) angebracht sind.

8. Vorrichtung nach einem der Ansprüche 5 bis 7, dadurch gekennzeichnet, daß die Scheiben (170) sektorenförmige Ausnehmungen (172) aufweisen, zwischen denen Stege (174) verlaufen, die turbinenschaufelförmig ausgebildet sind.

9. Vorrichtung nach einem der Ansprüche 1 bis 4, dadurch gekennzeichnet, daß die Waschkammer (18) in eine Waschzone (201), in der die drehbare Vorrichtung Mittel (228, 230, 234) zur Zerstäubung des Waschwassers und zur Bewegung des Rauchgas-Waschwassertröpfchen-Gemisches enthält, eine Zentrifugierzone (202), in der die drehbare Vorrichtung Mittel (260, 262) aufweist, die dazu dienen, das Rauchgas-Waschwassertröpfchen-Gemisch in eine Rotationsbewegung zu versetzen und so zu trocknen, und eine Ventilatorzone (203), in der die drehbare Vorrichtung Mittel (270, 272) zum Fördern des gereinigten und getrockenten Rauchgases aufweist, aufgeteilt ist.

10. Vorrichtung nach Anspruch 9, dadurch gekennzeichnet, daß als Vorrichtung zur Zuführung und Zerstäubung des Waschwassers in der Waschzone (201) ein feststehendes, horizontal in der Rotationsachse der drehbaren Vorrichtung verlaufendes Rohr (224) dient, welches an einem Ende verschlossen ist und an seiner Mantelfläche eine Vielzahl feiner Düsenöffnungen aufweist.

11. Vorrichtung nach Anspruch 10, dadurch gekennzeichnet, daß das Rohr (224) von einem inneren zylinderförmigen Abschnitt (226) und einem äußeren zylinderförmigen Abschnitt (232) des Rotors umgeben ist, wobei diese beiden Abschnitte (226, 232) koaxial am Rotor angeordnet sind, und unterschiedliche Durchmesser aufweisen.

12. Vorrichtung nach Anspruch 11, dadurch gekennzeichnet, daß der innere Abschnitt (226) des Rotors (222) zusätzlich mit radial verlaufenden gelochten oder geschlitzten Blechen (230) an der Innenseite seiner Mantelfläche versehen ist.

13. Vorrichtung nach einem der Ansprüche 9 bis 12, dadurch gekennzeichnet, daß zwischen der Waschzone (201) und der Zentrifugierzone (202) Trennbleche (255) angebracht sind, und daß die Ableitung (24) für das Waschwasser an der Außenseitenwand der Waschzone (201) leicht erhöht angebracht ist.

14. Vorrichtung nach einem der Ansprüche 9 bis 13, dadurch gekennzeichnet, daß der Rotor (222) im Bereich der Zentrifugierzone (202) aus einer zylinderförmigen koaxialen Trommel (262) aufgebaut ist, die nur sehr kleine Öffnungen aufweist, und mittels radial verlaufender Bleche (260) mit der Achse (250) des Rotors verbunden ist.

15. Vorrichtung nach einem der Ansprüche 9 bis 14, dadurch gekennzeichnet, daß der Rotor (222) in der Ventilatorzone (203) eine senkrecht auf der Rotationsachse des Rotors (222) stehende Scheibe (272) umfaßt, die in ihrem Außenbereich mit radial verlaufenden Blechen (270), die sich in Richtung der Rotationsachse erstrecken, versehen ist.

16. Vorrichtung nach Anspruch 15, dadurch gekennzeichnet, daß die Ventilatorscheibe mit einem als Luftleitblech ausgebildeten Lochblech (274) umgeben ist.

## Claims

1. Apparatus for flue gas cleaning comprising a scrubbing chamber (18; 118), a flue gas feed means (16; 116), a flue gas discharge means (20; 120) and a drain means (24; 124) for used scrubbing water and a device (122; 156; 224) for feeding and atomising the scrubbing water, wherein arranged in the scrubbing chamber (18; 118) is a device (150, 170, 180, 222) which is rotatable about a horizontal axis by means of a drive motor (152; 252) and which carries the means (170, 180; 228, 230, 234) for atomisation of the scrubbing water, and wherein fixed to the rotatable device (150, 170, 180, 222) are further means (160, 174, 192; 230, 270, 272) for transportation of the flue gas and the atomised scrubbing water in helical movements in a horizontal direction through the scrubbing chamber (18; 118), **characterised in** that the drain means (24; 124) for used scrubbing water is so arranged that a sump of scrubbing water remains in the scrubbing chamber (18; 118) and the means (170, 180; 232, 234) for atomisation of the scrubbing water arranged at the rotatable device (150, 170, 180; 222) partially dip into said sump.

2. Apparatus according to claim 1, characterised in that there is provided a circulating means (24, 26, 28) for the scrubbing water, which includes a circulating pump (28) and which connects the drain (24; 124) for the used scrubbing water and the feed conduit (22; 122) for the feed of scrubbing water into the scrubbing chamber (18; 118).

3. Apparatus according to claim 2, characterised in that the circulating means (26, 28) includes a tank (26) in which the used scrubbing water is collected so that solid contaminating materials can settle, which is connected to the drain (24; 124) for the used scrubbing water and from which the scrubbing water is fed to the circulating pump again.

4. Apparatus according to claim 3, characterised in that the tank (26) includes a heat exchanger (46) for the recovery of the heat energy from the used scrubbing water.

5. Apparatus for flue gas cleaning according to one of claims 1 to 4, characterised in that the scrubbing water is sprayed through nozzles (156) which are mounted at the peripheral surface of the cylindrical scrubbing chamber (118) on to rotating disks (170) which further atomise the scrubbing water.

6. Apparatus for flue gas cleaning according to claim 5, characterised in that the disks (170) are mounted on a shaft (150) which at the same time carries a fan wheel (160) and which is driven by a motor (152).

7. Apparatus according to claim 5 or 6, characterised in that spicer portions (190) with blades (192) welded thereto are mounted between the disks (170) on the shaft (150).

8. Apparatus according to one of claims 5 to 7, characterised in that the disks (170) have sector-shaped openings (172) between which extend limb portions (174) which are in the form of turbine vanes.

9. Apparatus according to one of claims 1 to 4, characterised in that the scrubbing chamber (18) is divided into a scrubbing zone (201) which contains devices (228, 230, 234) for atomisation of the scrubbing water and for movement of the flue gas-scrubbing water droplet mixture, a centrifuging zone (202) which contains devices (260, 262) on the rotatable device which serve to displace the flue gas-scrubbing water droplet mixture in a rotary movement and thus dry it, and a fan zone (203) which contains a device (270, 272) on the rotatable device for conveying the cleaned and dried flue gas.

10. Apparatus according to claim 9, characterised in that the device for feeding and atomising the scrubbing water in the scrubbing zone (201) is a stationary pipe (224) which extends horizontally on the axis of rotation of the rotatable device and which is closed at one end and which has a multiplicity of fine nozzle openings at its peripheral surface.

11. Apparatus according to claim 10, characterised in that the pipe (224) is surrounded by an inner cylindrical portion (226) of the rotor and an outer cylindrical portion (232) of the rotor, wherein said two portions (226, 232) are arranged coaxially on the rotor and are of different diameters.

12. Apparatus according to claim 11, characterised in that the inner portion (226) of the rotor (222) is additionally provided with radially extending apertured or slitted sheet metal portions (230) at the inside of its peripheral surface.

13. Apparatus according to one of claims 9 to 12, characterised in that separating plate members (255) are disposed between the scrubbing zone (201) and the centrifuging zone (202) and that the drain (24) for the scrubbing water is disposed in a slightly raised position at the outer side wall of the scrubbing zone (201).

14. Apparatus according to one of claims 9 to 13, characterised in that in the region of the centifuging zone (202) the rotor (222) is composed of a cylindrical coaxial drum (262) which has only very small openings and which is connected by means of radially extending plate portions (260) to the shaft member (250) of the rotor.

15. Apparatus according to one of claims 9 to 14, characterised in that in the fan zone (203) the rotor (222) includes a disk (272) which is disposed perpendicularly to the axis of rotation of the rotor (222) and which is provided in its outer region with radially extending plate portions (270) which extend in the direction of the axis of rotation.

16. Apparatus according to claim 15, characterised in that the fan disk is surrounded by an apertured plate portion (274) which is in the form of an air deflector plate.

## Revendications

1. Dispositif d'épuration des gaz de fumée, avec une chambre de lavage (18; 118), une amenée de gaz de fumée (16; 116), une évacuation de gaz de fumée (20; 120) et une dérivation (24; 124) pour l'eau de lavage usée et avec un dispositif à demeure (122; 156; 224) pour l'amenée et la pulvérisation de l'eau de lavage, un dispositif rotatif (150, 170, 180; 222) tournant autour d'un axe horizontal au moyen d'un moteur d'entraînement (152; 252), étant disposé dans la chambre de lavage (18; 118), dispositif portant des moyens (170, 180; 228, 230, 234) pour assurer la pulvérisation de l'eau de lavage et d'autres moyens (160, 174, 192; 230, 270, 272) étant fixés sur le dispositif tournant (150, 170, 180; 222), pour assurer le transport des gaz de fumée et de l'eau de lavage pulvérisée, en produisant des mouvements hélicoïdaux en direction horizontale dans la chambre de lavage (18; 118), caractérisé en ce que la dérivation (24, 124) destinée à l'eau de lavage usée est disposée, ou réglée, de manière à ce que dans la chambre de lavage (18; 118) subsiste un volume d'eau de lavage et les moyens (170, 180; 232, 234) montés sur le dispositif tournant (150, 170, 180; 222) plongeant partiellement dans ce volume, pour assurer la pulvérisation de l'eau de lavage.

2. Dispositif selon la revendication 1, caractérisé en ce qu'est prévu un dispositif à circulation (24, 26, 28) destiné à l'eau de lavage, comprenant une pompe de circulation (28) et reliant la dérivation (24, 124) prévue pour l'eau de lavage usée et l'amenée (22; 122) prévue pour assurer l'alimentation en eau de lavage dans la chambre de lavage (18; 118).

3. Dispositif selon la revendication 2, caractérisé en ce que le dispositif de circulation (26, 28) comprend un réservoir (26) dans lequel est collectée l'eau de lavage usée, afin que les souillures constituées par des solides puissent s'y déposer, le réservoir étant relié à la dérivation (24; 124) destinée à l'eau de lavage usée et cette eau étant retournée à la pompe de circulation, depuis ce réservoir.

4. Dispositif selon la revendication 3, caractérisé en ce que le réservoir (26) comprend un échangeur de chaleur (46) destiné à la récupération de l'énergie thermique issue de l'eau de lavage usée.

5. Dispositif pour l'épuration de gaz de fumée selon l'une des revendications 1 à 4, caractérisé en ce que l'eau de lavage est pulvérisée au moyen de buses (156) montées sur la surface d'enveloppe de la chambre de lavage (18) à forme cylindrique, en visant des disques tournants (170) qui assurent une pulvérisation supplémentaire de l'eau de lavage.

6. Dispositif pour l'épuration de gaz de fumée selon la revendication 5, caractérisé en ce que les disques (170) sont montés sur un arbre (150) portant simultanément une roue de ventilateur (160) et qui est entraîné par un moteur (152).

7. Dispositif selon la revendication 5 ou 6, caractérisé en ce qu'entre les disques (170) sont montées sur l'arbre (150) des pièces d'espacement (190) portant des ailettes (192) rapportées par soudage.

8. Dispositif pour l'épuration de gaz de fumée selon l'une des revendications 5 à 7, caractérisé en ce que les disques (170) présentent des évidements (172) en forme de secteurs, entre lesquels s'étendent des nervures (174) réalisées sous la forme d'aubes de turbine.

9. Dispositif pour l'épuration de gaz de fumée selon l'une des revendications 1 à 4, caractérisé en ce que la chambre de lavage (18) est subdivisée en une zone de lavage (201) dans laquelle le dispositif tournant contient des moyens (228, 230, 234) pour assurer la pulvérisation de l'eau de lavage et pour assurer la mise en mouvement du mélange gaz de fumée-gouttelette d'eau de lavage, une zone de centrifugation (202) dans laquelle le dispositif tournant présente des moyens (260, 262) servant à mettre en rotation le mélange gaz de fumée-gouttelette d'eau de lavage et la sécher ainsi, et une zone de ventilateur (203) dans lequel le dispositif tournant présente des moyens (270, 272) pour assurer le mouvement des gaz de fumée épurés et séchés.

10. Dispositif selon la des revendication 9, caractérisé en ce qu'est utilisé comme dispositif pour l'amenée et la pulvérisation de l'eau de lavage dans la zone de lavage (201), un tube (224) fixe courant horizontalement dans la direction de l'axe de rotation du dispositif tournant et obturé à une extrémité et présentant, sur sa surface d'enveloppe, une pluralité de fines ouvertures formant buses.

11. Dispositif selon la revendication 10, caractérisé en ce que le tube (224) est entouré par un tronçon cylindrique intérieur (226) et un tronçon cylindrique extérieur (222), ces deux tronçons (226, 232) étant disposés coaxialement sur le rotor et présentant des diamètres différents.

12. Dispositif selon la des revendication 11, caractérisé en ce que le tronçon intérieur (226) du tube (22) est en plus pourvu de tôles (230) s'étendant radialement, dotés de perforations ou de fentes, sur la face intérieure de sa surface d'enveloppe.

13. Dispositif selon l'une des revendications 9 à 12, caractérisé en ce que, entre la zone de lavage (201) et la zone de centrifugation (202) sont montées des tôles de séparation (255) et en ce que la dérivation (24) destinée à l'eau de lavage est prévue en légère élévation sur la paroi de face extérieure de la zone de lavage (201).

14. Dispositif selon l'une des revendications 9 à 13, caractérisé en ce que le rotor (222) est constitué, dans la région de la zone de centrifugation (202), d'un tambour (262) coaxial, cylindrique, qui ne présente que des ouvertures très petites et qui est relié à l'axe (250) du rotor au moyen de tôles (260) courant radialement.

15. Dispositif selon l'une des revendications 9 à 14, caractérisé en ce que le rotor (222) comprend dans la zone de ventilateur (203) un disque (272) vertical, placé sur l'axe de rotation du rotor (222) et pourvu sur sa zone extérieure de tôles (270) courant radialement et s'étendant dans la direction de l'axe de rotation.

16. Dispositif selon la revendication 15, caractérisé en ce que le disque de ventilateur est entouré d'une tôle perforée (274) réalisée sous forme de tôle de guidage d'air.
